# EUROPÄISCHE PATENTSCHRIFT

(11) **EP 3 612 579 B1**
(45) Veröffentlichungstag und Bekanntmachung des Hinweises auf die Patenterteilung: **24.11.2021**
(21) Anmeldenummer: 18717379.4
(22) Anmeldetag: 17.04.2018
(51) Int. Cl.: C08G 18/48, C08G 18/76, C08G 18/24, B29C 70/52

(54) **PULTRUDAT, DESSEN HERSTELLUNG UND VERWENDUNG**
PULTRUDATE, ITS PREPARATION AND USE
PRODUIT PULTRUDÉ, SA FABRICATION ET SON UTILISATION

(30) Priorität: 18.04.2017 EP 17166812
(43) Veröffentlichungstag der Anmeldung: 26.02.2020
(73) Patentinhaber: Covestro Intellectual Property GmbH & Co. KG, 51373 Leverkusen (DE)
(72) Erfinder: WEGENER, Dirk, 40789 Monheim (DE); RASSELNBERG, Harald, 41541 Dormagen (DE); HOFFMANN, Andreas, 50259 Pulheim (DE); SCHMIDT, Heike, 51377 Leverkusen (DE); DELLHOFEN, Renate, 51373 Leverkusen (DE)
(74) Vertreter: Levpat
(86) Internationale Anmeldenummer: PCT/EP2018/059790
(87) Internationale Veröffentlichungsnummer: WO 2018/192927

(56) Entgegenhaltungen:
- WO-A1-2011/067246

## Beschreibung

Die vorliegende Erfindung betrifft Pultrudate auf Basis von Polyurethan und Kohlenstofffasern, ihre Herstellung und Verwendung.

Die Pultrusion, auch Strangziehverfahren genannt, ist ein kontinuierliches Verfahren zur Herstellung von faserverstärkten Profilen mit konstantem Querschnitt. Eine Pultrusionsanlage besteht typischerweise aus einer lmprägniereinheit und einem beheizten Werkzeug sowie einer Abzugsanlage, die den Prozess in Gang hält. Die Imprägnierung der Fasern erfolgt in einem offenen Bad oder in einer geschlossenen Injektionsbox. Für duroplastische Reaktivharze, wie z.B. Polyurethane werden geschlossene Injektionsboxen bevorzugt. Die Injektionsboxen können als separate Einheit vor dem eigentlichen Formwerkzeug angebracht oder aber in das Formwerkzeug integriert sein ("Direktinjektion").

Im beheizten Werkzeug erfolgen dann Formgebung und Aushärtung des Composites. Das fertige Profil wird mittels einer Abzugsanlage aus dem Werkzeug gezogen und abschließend in die gewünschten Längen geschnitten. Um den Pultrusionsprozess möglichst effizient zu gestalten werden hohe Prozessgeschwindigkeiten bei sehr guten mechanischen Eigenschaften des Pultrudats und einer hohen Oberflächengüte angestrebt.

Ein wesentlicher Schritt des Prozesses ist die Imprägnierung des Verstärkungsmaterials, beispielsweise der Faser-Rovings, der Faser-Matten, der Fasergelege und der Fasergewebe, mit dem Harz. Hierzu müssen die einzelnen Filamente der Verstärkungsfasern möglichst effektiv mit dem Harz getränkt werden. Eine sehr gute Tränkung ist Voraussetzung für die effektive Anbindung der Fasern an die Matrix, was letztendlich die Funktionalität des Composites gewährleistet.

Die Anforderungen an die Tränkungsfähigkeit des Harzes steigen naturgemäß mit der Prozessgeschwindigkeit an. Bei hoher Abzugsgeschwindigkeit muss die Tränkung der Fasern in kürzerer Zeit erfolgen als bei einer niedrigeren Abzugsgeschwindigkeit. Ebenso stellen unterschiedliche Fasermaterialien unterschiedliche Anforderungen an die Tränkungsfähigkeit des Harzes. Beispielsweise sind Verstärkungsmaterialien aus Glasfasern schon wegen des höheren Filamentdurchmessers wesentlich einfacher zu tränken als entsprechende Verstärkungsmaterialien aus Kohlenstofffasern.

Für eine effektive Herstellung von Kohlenstofffaser-Composites im Pultrusionsverfahren sollte das Tränkungsharz eine möglichst niedrige Viskosität während der Tränkungsphase unmittelbar nach Vermischung der Komponenten haben und anschließend schnell im beheizten Pultrusionswerkzeug aushärten.

Die Beschreibung von Polyurethanpultrudaten ist vielfältig.

So wird in der WO 2011/067246 A1 ein Pultrusionsharzsystem beschrieben, das (a) Di- oder Polyisocyanate, (b) Verbindungen mit mindestens zwei gegenüber Isocyanaten reaktiven Gruppen, (c) Katalysator, (d) höherfunktionelle Säure mit einer Funktionalität von größer gleich 2 und gegebenenfalls (e) weitere Hilfs- und Zusatzstoffe enthält. Die höherfunktionelle Säure hat einen Siedepunkt von mindestens 200 °C bei Normaldruck und ist in der Verbindung mit mindestens zwei gegenüber Isocyanaten reaktiven Gruppen löslich. Darüber hinaus wird ein Verfahren zur Herstellung eines Pultrudats sowie das entsprechende Pultrudat (Seite 1, Zeile 5-13) beschrieben. Als Fasermaterial werden besonders bevorzugt Kohlenstofffasern bzw. Glasfasern eingesetzt (Seite 10, Zeile 18). In den erfindungsgemäßen Beispielen werden ausschließlich Glasfasern verwendet und mit dem beschriebenen Harz Pultrusionsgeschwindigkeiten bis 2,5 m/min. erzielt. Eine spezifische Eigenschaft des Pultrusionsharzsystems, die es für eine Pultrusion mit Kohlenstofffasern geeignet macht, wird nicht erwähnt. Außer einem Hinweis, dass das Pultrusionsharzsystem unmittelbar nach dem Vermischen der Komponenten (a) bis (e) eine Viskosität von kleiner 1500 mPas bei 25°C aufweist (Anspruch 9), die für alle aufgeführten Fasermaterialien gilt, gibt die Anmeldung keinerlei Auskunft über die chemische Zusammensetzung und die geeignete Viskosität der eingesetzten Polyurethanharze für eine Pultrusion mit Kohlenstofffasern.

US 2008/090966 A1 beschreibt ein Reaktionssystem zur Herstellung eines faserverstärkten Composites im Pultrusionsverfahren beinhaltend ein Endlosfaser-Verstärkungsmaterial und eine nicht mischbare Polyurethanformulierung enthaltend eine Polyisocyanat-Komponente enthaltend wenigstens ein Polyisocyanat und eine isocyanatreaktive Komponente enthaltend mindestens einen isocyanatreaktiven Stoff. Darüber hinaus wird ein Pultrusionsprozess sowie ein mit diesem Prozess hergestelltes faserverstärktes Polyurethan-Composite beschrieben. Als Verstärkungsfasern werden alle für eine Pultrusion geeignete Fasern, darunter auch Glasfasern und Kohlenstofffasern genannt. Eine spezifische Eigenschaft des Reaktionssystems, wie z.B. einen geeigneten Viskositätsverlauf während der Polyurethanbildung, die es für eine Pultrusion mit Kohlenstofffasern geeignet macht, wird nicht erwähnt.

US 2008/0087373 A1 beschreibt ein Polyurethansystem sowie einen Pultrusionsprozess zur Herstellung eines faserverstärkten Composites. Das Polyurethansystem besteht aus mindestens einem Isocyanat und einer isocyanatreaktiven Komponente, die mindestens ein Polymerpolyol enthält. Als geeignete Faserverstärkungen werden unter anderem Glasfasern und Kohlenstofffasern aufgeführt. Spezifische Eigenschaften des Reaktionssystems zur Verarbeitung mit Kohlenstofffasern fehlen in der Anmeldung. Es ist vielmehr zu erwarten, dass Polymerpolyole aufgrund ihrer hohen Viskosität eher nachteilig für eine ausreichende Durchtränkung von Kohlefasern während der Imprägnierphase des Pultrusionsprozesses sind.

Aufgabe der vorliegenden Erfindung war es daher, Pultrudate mit Kohlenstofffasern als Verstärkungsstoff zur Verfügung zu stellen, die eine sehr gute Durchtränkung der Fasern mit dem Harz aufweisen und gleichzeitig einfach und schnell hergestellt werden können.

Diese Aufgabe konnte überraschend durch die erfindungsgemäßen Polyurethanpultrudate und das erfindungsgemäße Verfahren gelöst werden.

Im Sinne dieser Anmeldung wird die Bezeichnung "Polyisocyanat" für eine organische Verbindung, die zwei oder mehrere Isocyanatgruppen (-N=C=O) enthält, verwendet.

"Monomeres MDI" bedeutet im Sinne dieser Anmeldung eine Polyisocyanatmischung bestehend aus einem oder mehreren Verbindungen ausgewählt aus 4,4'-Diphenylmethandiisocyanat, 2,4'-Diphenylmethandiisocyanat und 2,2'-Diphenylmethandiisocyanat.

"Oligomeres MDI" bedeutet im Sinne dieser Anmeldung eine Polyisocyanatmischung bestehend aus höherkernigen Homologen des MDI, welche mindestens 3 aromatische Kerne und eine Funktionalität von mindestens 3 aufweisen.

"Polymeres MDI" wird in dieser Anmeldung verwendet, um eine Mischung bestehend aus oligomerem MDI und monomerem MDI zu bezeichnen.

Gegenstand der Erfindung sind Polyurethanpultrudate bestehend aus 40-80, bevorzugt 50-75 Vol.-% Kohlenstofffasern und Polyurethanharz, welches eine Dichte von >1,05 g/cm³ aufweist, wobei das Polyurethan erhältlich ist aus einem Reaktionsgemisch bestehend aus
einer Polyisocyanatkomponente (A)
einer Polyolkomponente (B) bestehend aus
   b1) einem Gemisch von mindestens zwei Polyolen
   b2) 0-20 Gew.-%, bezogen auf das Gesamtgewicht von (B), einer oder mehrerer weiterer Isocyanat-reaktiven Verbindungen, die von b1) verschieden sind,
   in Gegenwart von
   b3) 0-5 Gew.-%, bezogen auf das Gesamtgewicht von B), eines oder mehrerer Katalysatoren,
   b4) 0-20 Gew.-%, bezogen auf das Gesamtgewicht von (B), weiterer Hilfs- und/oder Zusatzmittel, und
0,1-8 Gew.-%, bezogen auf das Gesamtgewicht von (B) mindestens eines internen Trennmittels (C),
dadurch gekennzeichnet, dass
die Polyisocyanatkomponente (A)
   1) > 55 Gew.-%, bezogen auf das Gesamtgewicht von (A), monomeres Diphenylmethandiisocyanat (MDI) enthält, wobei
   2) die Summe aus 2,2'-MDI und 2,4'-MDI, bezogen auf das Gesamtgewicht von (A), <40 Gew.-% beträgt, und
   3) kein Prepolymer enthält,
die Polyolkomponente (B) kein Polymerpolyol enthält,
die zahlenmittlere Hydroxylzahl der Summe der Komponenten in (B) ≥400 mg KOH/g und ≤2000 mg KOH/g ist,
die Summe der nominalen OH-Funktionalitäten in (B) einen zahlenmittleren Wert zwischen 2,5 und 3,5 aufweist, und
das Verhältnis der Anzahl der NCO-Gruppen in (A) zu der Summe der Anzahl der OH-Gruppen in (B) und (C) multipliziert mit 100 (der sogenannte Index) einen Wert von 90-120 aufweist.

Besonders bevorzugt sind Polyurethanpultrudate bestehend aus 50-75 Vol.-% Kohlenstofffasern und Polyurethanharz, welches eine Dichte von >1,05 g/cm³ aufweist, wobei das Polyurethan erhältlich ist aus einem Reaktionsgemisch bestehend aus
einer Polyisocyanatkomponente (A)
einer Polyolkomponente (B) bestehend aus
   b1) einem Gemisch von mindestens zwei Polyetherpolyolen
   b2) 0-15 Gew.-%, bezogen auf das Gesamtgewicht von (B), aliphatischen Alkoholen
      in Gegenwart von
   b3) 0-5 Gew.-%, besonders bevorzugt 0,1-2 Gew.-%, ganz besonders bevorzugt 0,5-2 Gew.-%, bezogen auf das Gesamtgewicht von B), einem oder mehreren Metallkatalysatoren,
   b4) 0-20 Gew.-%, bezogen auf das Gesamtgewicht von (B), weiteren Hilfs- und/oder Zusatzmitteln
0,1-6 Gew.-%, besonders bevorzugt 0,1-4 Gew.-%, bezogen auf das Gesamtgewicht von (B), mindestens eines internen Trennmittels (C),
dadurch gekennzeichnet, dass
die Polyisocyanatkomponente (A)
   1) > 65 Gew.-%, besonders bevorzugt > 80 Gew.-%, bezogen auf das Gesamtgewicht von (A), monomeres MDI enthält, wobei
   2) die Summe aus 2,2'-MDI und 2,4'-MDI, bezogen auf das Gesamtgewicht von (A), ≤30 Gew.% beträgt und
   3) kein Prepolymer enthält,
die Polyolkomponente (B) kein Polymerpolyol enthält,
die zahlenmittlere Hydroxylzahl der Summe der Komponenten in (B) ≥420 mg KOH/g und ≤700 mg KOH/g, besonders bevorzugt ≥ 450 mg KOH/g und ≤ 650 mg KOH/g ist, und die Summe der nominalen OH-Funktionalitäten in (B) einen zahlenmittleren Wert zwischen 2,6 und 2,8 aufweist, und
das Verhältnis der Anzahl der NCO-Gruppen in (A) zu der Summe der Anzahl der OH-Gruppen in (B) und (C) multipliziert mit 100 einen Wert von 90-120 aufweist.

Die Polyisocyanatkomponente (A) enthält vorzugsweise mehr als 55 Gew.-%, bevorzugt mehr als 65 Gew.-% und besonders bevorzugt mehr als 80 Gew.-%, bezogen auf das Gesamtgewicht von (A), monomeres Diphenylmethandiisocyanat (MDI).

Neben den weniger als 40 Gew.-% (bevorzugt ≤30 Gew.-%) 2,4'-MDI und/oder 2,2'-MDI enthält die Polyisocyanatkomponente bevorzugt 4,4'-MDI und oligomeres MDI.

Der NCO-Gehalt der Polyisocyanatkomponente (A) liegt vorzugsweise über 25 Gew.-%, bevorzugt über 30 Gew.-%, besonders bevorzugt über 31,5 Gew.-%.

Die Viskosität der Polyisocyanatkomponente (A) liegt vorzugsweise bei ≤250 mPas (bei 25°C), bevorzugt ≤50 mPas (bei 25°C) und besonders bevorzugt ≤35 mPas (bei 25°C), gemessen nach DIN 53019-1.

Die Funktionalität der Polyisocyanatkomponente (A) liegt vorzugsweise bei 2,1 bis 2,9, bevorzugt bei 2,1 bis 2,5, besonders bevorzugt bei 2,1 bis 2,3.

Zusätzlich können die üblichen aliphatischen, cycloaliphatischen, araliphatischen Di- und/oder Polyisocyanate und insbesondere aromatischen Isocyanate zum Einsatz kommen, welche aus der Polyurethanchemie bekannt sind. Beispiele solcher geeigneter Polyisocyanate sind Ethylendiisocyanat, 1,4-Butylendiisocyanat, 1,5-Pentandiisocyanat, 1,6-Hexamethylendiisocyanat (HDI), 1,12-Dodecandiisocyant, Cyclobutan-1,3-diisocyanat, Cyclohexan-1,3- und -1,4-diisocyanat und Mischungen dieser Isomere, Isophorondiisocyanat (IPDI), 2,4- und 2,6-Hexahydrotoluylendiisocyanat und Mischungen dieser Isomere, 2,2,4- und/oder 2,4,4-Trimethylhexamethylendiisocyanat, Bis(4,4'-, 2,4'- und 2,2'-isocyanatocyclohexyl)methan oder Mischungen dieser Isomere, und aromatische Isocyanate der allgemeinen Formel R(NCO)z, wobei R ein polyvalenter organischer Rest ist, der einen Aromaten aufweist, und z eine ganze Zahl von mindestens 2 ist. Beispiele hierfür sind 1,3-Diisocyanato-o-xylol, 1,3-Diisocyanato-p-xylol, 1,3-Diisocyanato-m- xylol, 2,4-Diisocyanato-1-chlorobenzol, 2,4-Diisocyanato-1-nitro-benzol, 2,5-Diisocyanato-1-nitrobenzol, m-Phenylendiisocyanat, p-Phenylendiisocyanat, 2,4-Toluylendiisocyanat, 2,6-Toluylendiisocyanat, Mischungen aus 2,4- and 2,6-Toluylendiisocyanat, 1,5-Naphthalindiisocyanat, 1-Methoxy-2,4-phenylendiisocyanat, 4,4'-Biphenylendiisocyanat, 3,3'-Dimethyl-4,4'-diphenylmethandiisocyanat, und 3,3'-Dimethyldiphenylmethan-4,4'-diisocyanat; Triisocyanate, wie 4,4',4"-Triphenylmethantriisocyanat und 2,4,6-Toluoltriisocyanat, und Tetraisocyanate, wie 4,4'-Dimethyl-2,2'-5,5'-diphenylmethantetraisocyanat sowie, 1,3- und/oder 1,4-Bis-(2-isocyanato-prop-2-yl)-benzol (TMXDI), 1,3-Bis-(isocyanatomethyl)benzol (XDI).

Neben den vorstehend genannten Isocyanaten können auch modifizierte Isocyanate, wie z.B. solche mit Uretdion-, Isocyanurat-, Carbodiimid-, Uretonimin-, Allophanat- oder Biuretstruktur, eingesetzt werden.

Als Gemisch (b1) aus mindestens zwei Polyolen können erfindungsgemäß Polyetherpolyole, Polyesterpolyole, Polyetheresterpolyole und/oder Polycarbonatpolyole eingesetzt werden. Vorzugsweise werden im Gemisch (b1) Polyetherpolyole und/oder Polyesterpolyole, besonders bevorzugt Polyetherpolyole eingesetzt.

Die als b1) eingesetzten Polyole können neben der OH- Funktion auch weitere gegenüber Isocyanat reaktive Wasserstoffatome (= aktive Wasserstoffatome) enthalten, wie beispielsweise NH-Gruppen und NH₂-Gruppen. Soweit solche weiteren aktiven Wasserstoffatome vorhanden sind, stammen bevorzugt mehr als 90 %, insbesondere mehr als 95 %, besonders bevorzugt mehr als 99 % und ganz besonders bevorzugt 100 % aller gegenüber Isocyanat reaktiven Wasserstoffatome in der Polyolformulierung aus OH-Funktionen.

Solche Polyole sind beispielsweise von Ionescu in "Chemistry and Technology of Polyols for Polyurethanes", Rapra Technology Limited, Shawbury 2005, S.31 ff. (Kap. 3: The General Characteristics of Oligo-Polyols, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben.

Bevorzugt werden als Gemisch b1) zwei oder mehrere Polyetherpolyole eingesetzt, welche auf an sich bekannte Weise durch Polyaddition von Alkylenoxiden wie Propylenoxid und/oder Ethylenoxid an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden, z.B. Ethylenoxid, Butylenoxid und/oder Propylenoxid, hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Bisphenol A, Glycerin, Trimethylolpropan, Pentaerythrit, Sorbit und Saccharose und aminische Starterverbindungen wie z.B. Ethylendiamin und Triethanolamin. Die Starterverbindungen können allein oder im Gemisch verwendet werden. Besonders bevorzugt sind 1,2- und 1,3- Propylenglykol, Diethylenglykol, Sorbit, Glycerin, Trimethylolpropan, Saccharose und Gemische aus den genannten Produkten. Vertreter der genannten Komponente b1) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Bei den Polyesterpolyolen handelt es sich um Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind.

Das Polyurethansystem kann 0-20 Gew.-%, bevorzugt 0-15 Gew.-%, bezogen auf das Gesamtgewicht von (B), weitere Isocyanat-reaktive Komponenten b2) enthalten, welche vom Gemisch b1) verschieden sind. Diese sind als Komponenten für Polyurethan an sich bekannt. Beispiele sind mehrwertige Alkohole bzw. (Oxy)alkylendiole, z.B. Ethylenglykol und seine Oligomeren, Propylenglykol und seine Oligomeren, Hexandiol-1,6, Glycerin oder Trimethylolpropan und weitere OH-funktionelle Verbindungen wie z. B. Sorbit oder Bis(2-Hydroxyethylenoxy)benzol.

Als Katalysatorkomponente (b3) können beispielsweise die bekannten Polyurethankatalysatoren eingesetzt werden, wie z.B. organische Metallverbindungen, wie Kalium- oder Natriumsalze organischer Carbonsäuren wie z.B. Kaliumacetat; ebenso Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dimethylzinndilaurat, Dibutylzinnmaleat und Dioctylzinndiacetat, weiterhin beispielsweise Diisooctyl-2,2'-[(dioctylstannylen)bis(thio)]diacetat, Di-n-butyl-bis(dodecylthio)-Zinn, 2-Ethylhexyl-4,4'-dibutyl-10-ethyl-7-oxo-8-oxa-3,5-dithia-4-stannatetradecanoat, Dimethylzinndithioglycolat und/oder stark basische Amine wie 2,2,2-Diazabicyclooctan, N,N-Dimethylaminopropylamin, N,N-bis(3-dimethylaminopropyl)-N-isopropanolamin, Triethylamin, Triethylendiamin, Tetramethylhexamethylendiamin, Pentamethyldiethylentriamin, N,N-Dimethylcyclohexylamin oder Bis(N,N-Dimethylaminoethyl)ether, N,N-Dimethylbenzylamin, N,N-Methyldibenzylamin und N-Methylimidazol, und latente Katalysatoren. Latente Katalysatoren und ihr Wirkmechanismus werden beispielsweise in EP 2531538 A1, Seiten 1 ― 4 sowie Seite 9, Zeile 26 bis Seite 10, Zeile 2 beschrieben. Typische latente Katalysatoren sind blockierte Amin- und Amidin-Katalysatoren, z.B. Katalysatoren der Hersteller Air Products (wie z.B. Polycat® SA-1/10, Dabco KTM 60) und Tosoh Corporation (wie etwa Toyocat® DB 2, DB 30, DB 31, DB 40, DB 41, DB 42, DB 60, DB 70). Weitere Vertreter von Katalysatoren sowie Einzelheiten über die Wirkungsweise der Katalysatoren sind im Kunststoff-Handbuch, Band VII "Polyurethane", 3. Auflage, Carl Hanser Verlag, München / Wien, 1993 auf den Seiten 104 - 110 beschrieben.

Als Hilfs- und Zusatzmittel b4) können alle zur Herstellung von Polyurethanen bekannten Hilfs- und Zusatzmittel verwendet werden. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben. Genannt seien beispielsweise oberflächenaktive Substanzen, Entschäumer, Emulgatoren, Viskositätserniedriger, Farbstoffe, Pigmente, Flammschutzmittel, Wasserbinder, wie z.B. Tris(chlorethyl)orthoformiat, Erdalkalioxide, Zeolithe, Aluminiumoxide und Silikate, und Haftvermittler sowie Füllstoffe, wie Calciumcarbonat, Bariumsulfat, Titandioxid, Kurzfasern beispielsweise aus Glas oder Kohlenstoff oder natürliche Minerale, wie z. B. Talkum, Wollastonite oder Muskowite.

Als interne Trennmittel (C) können alle bei der Herstellung von Polyurethanen üblichen Trennmittel verwendet werden, beispielsweise langkettige Monocarbonsäuren, insbesondere Fettsäuren wie Stearinsäure, Amine langkettiger Carbonsäuren wie Stearinamid, Fettsäureester, Metallsalze langkettiger Fettsäuren wie Zinkstearat, oder Silikone. Besonders geeignet sind die speziell für die Pultrusion erhältlichen Internen Trennmittel, z. B. MOLD WIZ INT-1948 MCH, MOLD WIZ INT-1947 MCH, MOLD WIZ INT-1960 MCH, erhältlich von Axel Plastics oder Luvotrent TL HB 550-D, Luvotrent TL HB 550, erhältlich von Lehmann&Voss. Die internen Trennmittel werden in Mengen von 0,1-8 Gew.-%, bevorzugt 0,1-6 Gew.-% und besonders bevorzugt 0,1-4 Gew.-%, bezogen auf das Gesamtgewicht von (B) eingesetzt.

Ein weiterer Gegenstand der Erfindung ist ein Verfahren zur Herstellung der erfindungsgemäßen Polyurethanpultrudate umfassend die Schritte
i) Mischen der Komponenten (A), (B) und (C) unter Erhalt eines Polyurethanreaktivgemisches
ii) Fördern des Polyurethanreaktivgemisches in eine Injektionsbox
iii) Gleichzeitig zum Verfahrensschritt ii) Einleiten von Kohlenstofffasern durch die Injektionsbox unter Tränkung der Kohlenstofffasern mit dem Polyurethanreaktivgemisch
iv) Einleiten der mit dem Polyurethanreaktivgemisch getränkten Kohlenstofffasern in ein geheiztes Aushärtewerkzeug
v) Aushärten der mit dem Polyurethanreaktivgemisch getränkten Kohlenstofffasern im Aushärtewerkzeug unter Ausbildung eines Polyurethanpultrudates
vi) Ziehen des gehärteten Polyurethanpultrudates aus dem Aushärtewerkzeug mittels Zugmechanismen
vii) Schneiden des gehärteten Polyurethanpultrudates auf die gewünschte Länge.

Die Vermischung der Komponenten (A), (B) und (C) kann dabei in für die Herstellung von Polyurethanreaktivgemischen üblicher Weise erfolgen, beispielsweise im Hochdruck- oder Niederdruckverfahren. Bevorzugt werden die Komponenten (B) und (C) vorgemischt und die resultierende Mischung mit der Komponente (A) vermischt.

Die Temperatur bei Tränkung der Kohlenstoffasern im Verfahrensschritt iii) beträgt bevorzugt 0-75°C, besonders bevorzugt 10-50°C und ganz besonders bevorzugt 15-35°C. Der Aushärtungsschritt v) findet bevorzugt bei einer Temperatur des Formwerkzeugs von 140-220°C statt, wobei das Werkzeug bevorzugt mehrere, beispielsweise 3 oder 4 Zonen unterschiedlicher Temperatur aufweist.

Die Kohlenstofffasern liegen als Endlosfasern vor. Dabei wird unter Endlosfaser ein Fasermaterial verstanden, das eine Länge von mindestens mehreren Metern aufweist. Diese werden beispielsweise von Rollen oder Spulen abgewickelt. Dabei können als Fasermaterial Einzelfasern, sogenannte Faserrovings, geflochtene Fasern, Fasermatten, Fasergelege und Fasergewebe eingesetzt werden. Insbesondere bei Faserverbünden wie geflochtenen Fasern, verdrillten Fasern oder Fasergeweben können in den in diesen Faserverbünden enthaltenen Einzelfasern auch kürzere Einzelfasern enthalten sein. Der Faserverbund selbst muss aber als Endlosmaterial vorliegen.

In einer bevorzugten Ausführungsform der Erfindung werden die Kohlenstofffasern in Form von Faserrovings eingesetzt.

In einer weiteren Ausführungsform kann ein Anteil der Kohlenstofffasern, bevorzugt in den Kantenbereichen des Polyurethanpultrudates durch Glasfasern ersetzt sein.

In einer weiteren, bevorzugten Ausführungsform der Erfindung werden im Verfahrensschritt iii) zusätzlich zu den Kohlenstofffasern Abreißgewebe (sogenannte Peel Plies) derart durch die Injektionsbox geführt, dass diese vorzugsweise mindestens zwei Aussenseiten des fertigen Polyurethanpultrudates bilden. Bei der Weiterverarbeitung der erfindungsgemäßen Polyurethanpultrudate kann dieses Abreißgewebe unter Ausbildung mindestens zweier rauer Oberflächen auf den Aussenseiten entfernt werden, wodurch beispielsweise eine Verklebung der Poylurethanpultrudate erleichtert wird.

Die erfindungsgemäßen Polyurethanpultrudate können beispielsweise als leichte Verstärkungsprofile und Strukturelemente im Fahrzeug- und Flugzeugbau und in Windkraftanlagen eingesetzt werden. Derartige leichte Verstärkungsprofile können beispielsweise zur Herstellung sogenannter "Spar Caps" in Rotorblättern von Windkraftanlagen eingesetzt werden.

Die Erfindung soll in den nachfolgenden Beispielen näher erläutert werden.

### Beispiele:

Der Viskositätsverlauf von erfindungsgemäßen Polyurethanreaktivmischungen wurde nach Vermischen der Komponenten (A), (B) und (C) mittels eines Rheometers bestimmt und mit nicht erfindungsgemäßen Polyurethanreaktivmischungen verglichen.

### Rheometer: MCR 502 der Fa. Anton Paar

Viskositätsmessung gemäß Norm DIN 53019-1:2008-09 ( H << R ), (d/dt = 100 1/s): d/dt = Scherrate, Platte - Platte Messsystem PP 25, Messung in Rotation.

Zur Aufnahme des Viskositätsverlaufes wurden die in Tabelle 1 aufgeführten Polyolgemische jeweils mit der angegebenen Menge an internem Trennmittel versetzt, intensiv miteinander verrührt und auf 23°C temperiert. Anschließend wurde eine auf 23°C temperierte, dem in Tabelle 1 angegebenen Index entsprechende Menge Isocyanat zugesetzt und das Gemisch 20 s verrührt. Anschließend wurden sofort 300 µl der Mischung auf die untere Platte des Rheometers gegeben und die Messung gestartet. Die Platten des Rheometers waren vor Start der Messung auf 23°C temperiert. Mit Start der Messung wurde die Plattentemperatur mit einer Geschwindigkeit von 33 K/min. bis auf 139°C geheizt und die Viskosität nach unterschiedlichen Zeitintervallen sowie das Viskositätsminimum ermittelt. Die Aufnahme des ersten Messpunktes erfolgte dabei 15 s nach Ende der Vermischung der Polyol/Trennmittel-Mischung mit dem Isocyanat.

Zusätzlich wurden Fasertränkung und Aushärtung der Polyurethanreaktivmischungen bei der Herstellung der Polyurethanpultrudate bewertet.

Eingesetzt wurde eine Pultrusionsanlage mit einem beheizbaren Formwerkzeug mit 60 x 5 mm Innenmaß und einer vor dem Formwerkzeug angebrachten Injektionsbox. Dementsprechend wurden Rechteckprofile mit 60 mm Breite und 5 mm Wandstärke hergestellt. Als Verstärkungsmaterial wurden Kohlenstofffaser-Rovings (Pyrofil® TRW 40 50L KNA der Fa. Mitsubishi Rayon Co. Ltd.) verwendet und durch die Injektionsbox und das Formwerkzeug gezogen. Die Konzentration an Kohlenstofffasern im fertigen Profil betrug ca. 65 Vol.-%. Die in Tabelle 1 aufgeführten Polyolgemischewurden jeweils mit der angegebenen Menge an internem Trennmittel versetzt und intensiv verrührt. Diese Mischungen wurden jeweils mittels einer Niederdruckmischmaschine mit Statikmischer bei 23°C mit so viel Isocyanat vermischt, dass der jeweilige, in Tabelle 1 angegebene NCO-Index vorlag, und die entstehende Polyurethanreaktivmischung kontinuierlich in die Injektionsbox injiziert. Die benetzten Kohlenstofffasern wurden mit dem Abzugsmechanismus der Pultrusionsanlage kontinuierlich mit einer Geschwindigkeit von 1,50 m/min. durch das beheizte Formwerkzeug gezogen und ausgehärtet. Die Temperierung des Werkzeugs war in 3 Zonen unterteilt mit Temperaturen von 170°C in Zone 1 (Werkzeug-Eingang in Abzugsrichtung ), 190°C in Zone 2 (Werkzeug-Mitte) und 200°C in Zone 3 (Werkzeug-Ausgang). Anschließend wurden die fertigen Profile kontinuierlich auf die gewünschte Länge geschnitten.

Folgende Ausgangsstoffe wurden eingesetzt:
- Polyol 1: Glycerin gestartetes Triol, propoxyliert, OHZ = 235 mg KOH/g
- Polyol 2: Glycerin gestartetes Triol, propoxyliert, OHZ = 1050 mg KOH/g
- Polyol 3: Glycerin gestartetes Triol, propoxyliert, OHZ = 400 mg KOH/g
- Polyol 4: Propylenglykol gestartetes Diol, propoxyliert, OHZ = 28 mg KOH/g
- Polyol 5: Propylenglykol gestartetes Diol, propoxyliert, OHZ = 515 mg KOH/g
- Polyol 6: Propylenglykol gestartetes Diol, propoxyliert und ethoxyliert, OHZ = 57 mg KOH/g
- Polyol 7: Glycerin gestartetes Triol, propoxyliert, OHZ = 800 mg KOH/g
- Glycerin
- Katalysator 1: Diisooctyl-2,2'-[(dioctylstannylen)bis(thio)]diacetat
- Katalysator 2: TOYOCAT-DB30 der Fa. Tosoh Corporation
- Wasserbinder 1: MOLSIV® L - Pulver von Fa. UOP
- Wasserbinder 2: MOLSIV® L - Paste (50 %-ige Dispersion von MOLSIV® L-Pulver in Rizinusöl) von Fa. UOP
- Höherfunktionelle Säure: Säure auf Basis von Phtalsäureestern mit Diethylenglycol, Säurezahl = 127 mg KOH/g
- Internes Trennmittel 1: Luvotrent® TL HB 550 von Lehmann&Voss für die Pultrusion
- Internes Trennmittel 2: MOLD WIZ INT-1947 MCH
- MDI 1: Polymeres MDI mit einem NCO-Gehalt von 32,0 Gew.-%, einem Gehalt an monomerem MDI von 69 Gew.-%; der Gehalt an 2,4'-MDI und 2,2'-MDI beträgt in Summe 8 Gew.-%
- MDI 2: Polymeres MDI mit einem NCO-Gehalt von 31,5 Gew.-%, einem Gehalt an monomerem MDI von 47,5 Gew.-%; der Gehalt an 2,4'-MDI und 2,2'-MDI beträgt in Summe 5,4 Gew.-%
- MDI 3: Monomeres MDI mit einem NCO-Gehalt von 33,6 Gew.-%; der Gehalt an 2,4'-MDI und 2,2'-MDI beträgt in Summe 55,1 Gew.%
- MDI 4: Gemisch aus 80 GT polymerem MDI mit einer Viskosität von 200 mPas bei 25 °C und einem Gehalt an monomerem MDI von 39 Gew.-% und 20 GT monomerem MDI auf Basis von 2,4'-MDI und 4,4'-MDI. Der Gehalt des Gemisches an monomerem MDI beträgt 51,2 Gew.-%.

Die in den Beispielen verwendeten Polyurethanreaktivmischungen, die Polyurethane mit einer Dichte von >1,05g/cm³ ergeben, sind in Tabelle 1 (Mengenangaben in Gewichtsteilen), die entsprechenden Ergebnisse in Tabelle 2 zusammengefasst.

**Tabelle 1**

| | **Beispiel 1** | **Beispiel 2** | **Beispiel 3 (Vergleich)** | **Beispiel 4 (Vergleich)** | **Beispiel 5 (Vergleich)** | **Beispiel 6** | **Beispiel 7 (Vergleich)** |
|---|---|---|---|---|---|---|---|
| Polyol 1 | 28,47 | - | 28,47 | 28,47 | 28,33 | - | - |
| Polyol 2 | 26,00 | - | 26,00 | 26,00 | 20,00 | - | - |
| Glycerin | - | 11,00 | - | - | - | - | - |
| Polyol 3 | 23,81 | 62,20 | 23,81 | 23,81 | - | 50,00 | 50,00 |
| Polyol 4 | 9,79 | - | 9,79 | 9,79 | 10,00 | - | - |
| Polyol 5 | 9,26 | 10,00 | 9,26 | 9,26 | 39,00 | - | - |
| Polyol 6 | - | 12,00 | - | - | - | - | - |
| Polyol 7 | - | - | - | - | | 45,00 | 45,00 |
| Katalysator 1 | 0,67 | 0,80 | 0,67 | 0,67 | 0,67 | - | - |
| Katalysator 2 | - | - | - | - | - | 1,25 | 1,25 |
| Wasser-binder 1 | 2,00 | - | 2,00 | 2,00 | 2,00 | - | - |
| Wasser-binder 2 | - | 4,00 | - | - | - | - | - |
| Höherfunktionelle Säure | - | - | - | - | - | 2,00 | 2,00 |
| Mittlere OH-Zahl von B | 486 | 512 | 486 | 486 | 480 | 570 | 570 |
| Nominale Funktiona-lität von B | 2,73 | 2,64 | 2,73 | 2,73 | 2,43 | 2,9 | 2,9 |
| IMR 1 | 4,00 | 4,00 | 4,00 | 4,00 | 4,00 | - | - |
| IMR 2 | - | - | - | - | - | 5,00 | 5,00 |
| Isocyanat | MDI 1 | MDI 1 | MDI2 | MDI 3 | MDI 1 | MDI 1 | MDI 4 |
| Summe monomeres MDI | 69 | 69 | 47,5 | 100 | 69 | 69 | 51,2 |
| Summe 2,2'-MDI und 2,4'-MDI | 8 | 8 | 5,4 | 55,1 | 8 | 8 | 14,4 |

**Tabelle 2**

| | **Beispiel 1** | **Beispiel 2** | **Beispiel 3 (Vergleich)** | **Beispiel 4 (Vergleich)** | **Beispiel 5 (Vergleich)** | **Beispiel 6** | **Beispiel 7 (Vergleich)** |
|---|---|---|---|---|---|---|---|
| Viskosität [mPas] bei t = 15 s (Temp. = 23°C) | 272 | 246 | 571 | 88 | 191 | 285 | 637 |
| Viskosität [mPas] bei t = 59 s (T = 51°C) | 122 | 99 | 196 | 36 | 75 | 215 | 218 |
| Viskosität [mPas] bei t = 91 s (T = 69°C) | 44 | 43 | 91 | 19 | 35 | 40 | 76 |
| Viskositätsmini-mum [mPas] | 29 | 31 | 45 | 13 | 24 | 30 | 39 |
| Viskosität [mPas] bei t = 209 s (T = 131°C) | 1285 | 1461 | 1147 | 69 | 400 | 551 | 513 |
| Viskosität [mPas] bei t = 227 s (T = 139°C) | 9336 | 9588 | 8966 | 140 | 1602 | 3956 | 3631 |
| | | | | | | | |
| Fasertränkung | gut | gut | Schlecht; viele nicht benetzte Fasern | gut | gut | gut | Schlecht, viele nicht benetzte Fasern |
| Aushärtung | gut | gut | gut | Schlecht; klebrige Oberfläche der Profile mit viel Abrieb; nicht formstabil | Schlecht; Profile sehr weich | gut | gut |

Die Beispiele 1 und 2 zeigten eine niedrige Viskosität am Anfang der Reaktion, was zu einer guten Tränkung der Kohlenstofffasern führte. Die hohe Viskosität nach 227 s spiegelt die im Pultrusionsexperiment beobachtete gute Aushärtung wider. In Beispiel 3 war die Anfangsviskosität deutlich höher mit dementsprechender schlechter Tränkung der Kohlenstofffasern. Die in Beispiel 4 verwendete Mischung führte zwar zu einer guten Fasertränkung; die Aushärtung war jedoch bei der verwendeten Ziehgeschwindigkeit bei weitem nicht ausreichend. In Beispiel 5 führte die niedrige Funktionalität von Komponente B zu einem schlechten Aushärteverhalten; die Polyurethanpultrudate waren bei der vorgegebenen Geschwindigkeit am Werkzeugende zu weich. Die Beispiele 6 und 7 zeigen, dass bei Verwendung eines Polyolsystems mit einer höherfunktionellen Säure nur ein erfindungsgemäßes Isocyanat die gewünschte Kombination aus guter Fasertränkung und guter Aushärtung in der Pultrusion mit Kohlenstofffasern ergibt.

## Patentansprüche

1. Polyurethanpultrudat bestehend aus 40-80 Vol.-% Kohlenstofffasern und einem Polyurethanharz, welches eine Dichte von > 1,05 g/cm³ aufweist, wobei das Polyurethan erhältlich ist aus einem Reaktionsgemisch bestehend aus
einer Polyisocyanatkomponente (A),
einer Polyolkomponente (B), bestehend aus
b1) einem Gemisch von mindestens zwei Polyolen,
b2) 0-20 Gew.-%, bezogen auf das Gesamtgewicht von (B), einer oder mehrerer weiterer Isocyanat-reaktiven Verbindungen, die von b1) verschieden sind,
in Gegenwart von
b3) 0-5 Gew.-%, bezogen auf das Gesamtgewicht von (B), eines oder mehrerer Katalysatoren,
b4) 0-20 Gew.-%, bezogen auf das Gesamtgewicht von (B), weiterer Hilfs- und/oder Zusatzmittel,
0,1-8 Gew.-%, bezogen auf das Gesamtgewicht von (B), mindestens eines internen Trennmittels (C),
**dadurch gekennzeichnet, dass**
die Polyisocyanatkomponente (A)
1) >55 Gew.-%, bezogen auf das Gesamtgewicht von (A), monomeres Diphenylmethandiisocyanat (MDI) enthält, wobei
2) die Summe aus 2,2'-MDI und 2,4'-MDI, bezogen auf das Gesamtgewicht von (A), <40 Gew.-% beträgt, und
3) kein Prepolymer enthält,
die Polyolkomponente (B) kein Polymerpolyol enthält,
die zahlenmittlere Hydroxylzahl der Summe der Komponenten in (B) ≥400 mg KOH/g und ≤2000 mg KOH/g ist, und
die Summe der nominalen OH-Funktionalitäten in (B) einen zahlenmittleren Wert zwischen 2,5 und 3,5 aufweist, und
das Verhältnis der Anzahl der NCO-Gruppen in (A) zu der Summe der Anzahl der OH-Gruppen in (B) und (C) multipliziert mit 100 einen Wert von 90-120 aufweist.

2. Polyurethanpultrudat bestehend aus 50-75 Vol.-% Kohlenstofffasern und einem Polyurethanharz, welches eine Dichte von > 1,05 g/cm³ aufweist, wobei das Polyurethan erhältlich ist aus einem Reaktionsgemisch bestehend aus
einer Polyisocyanatkomponente (A),
einer Polyolkomponente (B), bestehend aus
b1) einem Gemisch von mindestens zwei Polyetherpolyolen,
b2) 0-15 Gew.-%, bezogen auf das Gesamtgewicht von (B), aliphatischer Alkohole,
in Gegenwart von
b3) 0-5 Gew.-%, bezogen auf das Gesamtgewicht von (B), eines oder mehrerer Metallkatalysatoren,
b4) 0-20 Gew.-%, bezogen auf das Gesamtgewicht von (B), weiterer Hilfs- und/oder Zusatzmittel,
0,1-6 Gew.-%, bezogen auf das Gesamtgewicht von (B), mindestens eines internen Trennmittels (C),
**dadurch gekennzeichnet, dass**
die Polyisocyanatkomponente (A)
1) >65 Gew.-%, bezogen auf das Gesamtgewicht von (A), monomeres MDI enthält, wobei
2) die Summe aus 2,2'-MDI und 2,4'-MDI, bezogen auf das Gesamtgewicht von (A), ≤ 30 Gew.-% beträgt, und
3) kein Prepolymer enthält,
die Polyolkomponente (B) kein Polymerpolyol enthält,
die zahlenmittlere Hydroxylzahl der Summe der Komponenten in (B) ≥420 mg KOH/g und ≤700 mg KOH/g ist, und
die Summe der nominalen OH-Funktionalitäten in (B) einen zahlenmittleren Wert zwischen 2,6 und 2,8 aufweist, und
das Verhältnis der Anzahl der NCO-Gruppen in (A) zu der Summe der Anzahl der OH-Gruppen in (B) und (C) multipliziert mit 100 einen Wert von 90-120 aufweist.

3. Verfahren zur Herstellung der Polyurethanpultrudate gemäß Anspruch 1 oder 2 umfassend die Schritte
i) Mischen der Komponenten (A), (B) und (C) unter Erhalt eines Polyurethanreaktivgemisches,
ii) Fördern des Polyurethanreaktivgemisches in eine Injektionsbox,
iii) Gleichzeitig zum Verfahrensschritt ii) Einleiten von Kohlenstofffasern durch die Injektionsbox unter Tränkung der Kohlenstofffasern mit dem Polyurethanreaktivgemisch,
iv) Einleiten der mit dem Polyurethanreaktivgemisch getränkten Kohlenstofffasern in ein geheiztes Aushärtewerkzeug,
v) Aushärten der mit dem Polyurethanreaktivgemisch getränkten Kohlenstofffasern im Aushärtewerkzeug unter Ausbildung eines Polyurethanpultrudates,
vi) Ziehen des gehärteten Polyurethanpultrudates aus dem Aushärtewerkzeug mittels Zugmechanismen,
vii) Schneiden des gehärteten Polyurethanpultrudates auf die gewünschte Länge.

4. Verwendung der Polyurethanpultrudate gemäß Anspruch 1 oder 2 als leichte Verstärkungsprofile und Strukturelemente im Fahrzeug- und Flugzeugbau und in Windkraftanlagen.

## Claims

1. Polyurethane pultrudate consisting of 40-80 vol% of carbon fibers and a polyurethane resin having a density of > 1.05 g/cm³, wherein the polyurethane is obtainable from a reaction mixture consisting of
a polyisocyanate component (A),
a polyol component (B) consisting of
b1) a mixture of at least two polyols,
b2) 0-20% by weight based on the total weight of (B) of one or more further isocyanate-reactive compounds distinct from b1),
in the presence of
b3) 0-5% by weight based on the total weight of (B) of one or more catalysts,
b4) 0-20% by weight based on the total weight of (B) of further assistant and/or additive substances,
0.1-8% by weight based on the total weight of (B) of at least one internal release agent (C), **characterized in that**
the polyisocyanate component (A) contains
1) > 55% by weight based on the total weight of (A) of monomeric diphenylmethane diisocyanate (MDI), wherein
2) the sum of 2,2'-MDI and 2,4'-MDI based on the total weight of (A) is < 40% by weight, and
3) contains no prepolymer,
the polyol component (B) contains no polymer polyol,
the number-average hydroxyl number of the sum of the components in (B) is ≥ 400 mg KOH/g and ≤2000 mg KOH/g, and
the sum of the nominal OH functionalities in (B) has a number-average value between 2.5 and 3.5, and the ratio of the number of NCO groups in (A) to the sum of the number of OH groups in (B) and (C) multiplied by 100 has a value of 90-120.

2. Polyurethane pultrudate consisting of 50-75 vol% of carbon fibers and a polyurethane resin having a density of > 1.05 g/cm³, wherein the polyurethane is obtainable from a reaction mixture consisting of
a polyisocyanate component (A),
a polyol component (B) consisting of
b1) a mixture of at least two polyether polyols,
b2) 0-15% by weight based on the total weight of (B) of aliphatic alcohols,
in the presence of
b3) 0-5% by weight based on the total weight of (B) of one or more metal catalysts,
b4) 0-20% by weight based on the total weight of (B) of further assistant and/or additive substances,
0.1-6% by weight based on the total weight of (B) of at least one internal release agent (C), **characterized in that**
the polyisocyanate component (A) contains
1) > 65% by weight based on the total weight of (A) of monomeric MDI, wherein
2) the sum of 2,2'-MDI and 2,4'-MDI based on the total weight of (A) is ≤ 30% by weight, and
3) contains no prepolymer,
the polyol component (B) contains no polymer polyol,
the number-average hydroxyl number of the sum of the components in (B) is ≥ 420 mg KOH/g and ≤700 mg KOH/g, and
the sum of the nominal OH functionalities in (B) has a number-average value between 2.6 and 2.8, and the ratio of the number of NCO groups in (A) to the sum of the number of OH groups in (B) and (C) multiplied by 100 has a value of 90-120.

3. Process for producing the polyurethane pultrudates according to Claim 1 or 2 comprising the steps of:
i) mixing the components (A), (B) and (C) to obtain a polyurethane reactive mixture,
ii) conveying the polyurethane reactive mixture into an injection box,
iii) simultaneously with process step ii) introducing carbon fibers through the injection box to impregnate the carbon fibers with the polyurethane reactive mixture,
iv) introducing the carbon fibers impregnated with the polyurethane reactive mixture into a heated curing mold,
v) curing the carbon fibers impregnated with the polyurethane reactive mixture in the curing mold to form a polyurethane pultrudate,
vi) pulling the cured polyurethane pultrudate from the curing mold by means of pulling mechanisms,
vii) cutting the cured polyurethane pultrudate to the desired length.

4. Use of polyurethane pultrudates according to Claim 1 or 2 as lightweight reinforcing profiles and structural elements in vehicle and aircraft construction and in wind power plants.

## Revendications

1. Produit pultrudé de polyuréthane consistant en 40 à 80 % en volume de fibres de carbone et en une résine de polyuréthane, qui présente une masse volumique > 1,05 g/cm³, le polyuréthane pouvant être obtenu à partir d'un mélange réactionnel consistant en
un composant polyisocyanate (A),
un composant polyol (B) consistant en
b1) un mélange d'au moins deux polyols,
b2) 0 à 20 % en poids, par rapport au poids total de (B), d'un ou plusieurs composés supplémentaires réactifs vis-à-vis des isocyanates, qui sont différents de b1),
en présence de
b3) 0 à 5 % en poids, par rapport au poids total de (B), d'un ou plusieurs catalyseurs,
b4) 0 à 20 % en poids, par rapport au poids total de (B), d'adjuvants et/ou d'additifs supplémentaires,
0,1 à 8 % en poids, par rapport au poids total de (B), d'au moins un agent de démoulage interne (C), **caractérisé en ce que**
le composant polyisocyanate (A)
1) contient ≥ 55 % en poids, par rapport au poids total de (A), de diisocyanate de diphénylméthane monomère (MDI),
2) la somme du 2,2'-MDI et du 2,4'-MDI, par rapport au poids total de (A), est < 40 % en poids, et
3) ne contient pas de prépolymère,
le composant polyol (B) ne contient pas de polyol polymère,
l'indice d'hydroxyle moyen en nombre de la somme des composants de (B) est ≥ 400 mg KOH/g et ≤ 2 000 mg KOH/g, et
la somme des fonctionnalités OH nominales de (B) présente une valeur moyenne en nombre entre 2,5 et 3,5, et
le rapport du nombre des groupes NCO de (A) à la somme des nombres des groupes OH de (B) et de (C), multiplié par 100, présente une valeur de 90 à 120.

2. Produit pultrudé de polyuréthane consistant en 50 à 75 % en volume de fibres de carbone et en une résine de polyuréthane, qui présente une masse volumique > 1,05 g/cm³, le polyuréthane pouvant être obtenu à partir d'un mélange réactionnel consistant en
un composant polyisocyanate (A),
un composant polyol (B) consistant en
b1) un mélange d'au moins deux polyétherpolyols,
b2) 0 à 15 % en poids, par rapport au poids total de (B), d'alcools aliphatiques en présence de
b3) 0 à 5 % en poids, par rapport au poids total de (B), d'un ou plusieurs catalyseurs métalliques,
b4) 0 à 20 % en poids, par rapport au poids total de (B), d'adjuvants et/ou d'additifs supplémentaires,
0,1 à 6 % en poids, par rapport au poids total de (B), d'au moins un agent de démoulage interne (C), **caractérisé en ce que**
le composant polyisocyanate (A)
1) contient > 65 % en poids, par rapport au poids total de (A), de MDI monomère,
2) la somme du 2,2'-MDI et du 2,4'-MDI, par rapport au poids total de (A), est ≤ 30 % en poids, et
3) ne contient pas de prépolymère,
le composant polyol (B) ne contient pas de polyol polymère,
l'indice d'hydroxyle moyen en nombre de la somme des composants de (B) est ≥ 420 mg KOH/g et ≤ 700 mg KOH/g, et
la somme des fonctionnalités OH nominales de (B) présente une valeur moyenne en nombre entre 2,6 et 2,8, et
le rapport du nombre des groupes NCO de (A) à la somme des nombres des groupes OH de (B) et de (C), multiplié par 100, présente une valeur de 90 à 120.

3. Procédé de fabrication de produits pultrudés de polyuréthane selon la revendication 1 ou 2, comprenant les étapes
i) mélange des composants (A), (B) et (C) avec obtention d'un mélange réactif de polyuréthane,
ii) transport du mélange réactif de polyuréthane dans une boîte d'injection,
iii) simultanément à l'étape ii), introduction de fibres de carbone dans la boîte d'injection par imprégnation des fibres de carbone avec le mélange réactif de polyuréthane,
iv) introduction des fibres de carbone imprégnées du mélange réactif du polyuréthane dans un moule de cuisson chauffé,
v) cuisson des fibres de carbone imprégnées du mélange réactif de polyuréthane dans le moule de cuisson avec formation d'un produit pultrudé de polyuréthane,
vi) tirage du produit pultrudé de polyuréthane durci à partir du moule de cuisson, à l'aide de mécanismes de tirage,
vii) découpage du produit pultrudé de polyuréthane durci à la longueur souhaitée.

4. Utilisation des produits pultrudés de polyuréthane selon la revendication 1 ou 2 en tant que profilé de renforcement et éléments structuraux légers en construction mécanique et aéronautique, et dans les installations éoliennes.
